# EUROPÄISCHE PATENTSCHRIFT

(11) **EP 2 470 859 B1**
(45) Veröffentlichungstag und Bekanntmachung des Hinweises auf die Patenterteilung: **19.11.2014**
(21) Anmeldenummer: 10741962.4
(22) Anmeldetag: 11.08.2010
(51) Int. Cl.: G01B 21/22

(54) **VORRICHTUNG ZUM ERFASSEN VON ZUMINDEST EINER NULLLAGE**
DEVICE FOR DETECTING AT LEAST ONE ZERO POSITION
DISPOSITIF POUR DÉTECTER AU MOINS UNE POSITION ZÉRO

(30) Priorität: 25.08.2009 DE 102009028859
(43) Veröffentlichungstag der Anmeldung: 04.07.2012
(73) Patentinhaber: ZF Friedrichshafen AG, 88038 Friedrichshafen (DE)
(72) Erfinder: MASCHMANN, Oliver, 88090 Immenstaad (DE); FUESSL, Andreas, 88079 Kressbronn (DE)
(86) Internationale Anmeldenummer: PCT/EP2010/061670
(87) Internationale Veröffentlichungsnummer: WO 2011/023542

(56) Entgegenhaltungen:
- DE-A1-102004 063 539
- DE-A1-102007 043 589

## Beschreibung

Die vorliegende Erfindung betrifft eine Vorrichtung zum Erfassen von zumindest einer Nulllage bei zumindest einem sich bewegenden Bauteil gemäß der im Oberbegriff des Patentanspruches 1 näher definierten Art.

Bei der Positionserfassung zum Beispiel bei Stellantrieben wird üblicherweise eine elektrische Sensorik verwendet. Beispielsweise können Sensoren verwendet werden, die auf einem aktiven oder auch passiven induktiven Verfahren beruhen. Aus Kosten- und Robustheitsgründen wird auf eine kontinuierliche Erfassung einer Position verzichtet und dafür eine schaltende Sensorik verwendet. Bei der schaltenden Sensorik wechselt der Sensor zwischen zwei elektrisch erkennbaren Zuständen.

Beispielsweise aus der Druckschrift DE 10 2007 043 589 A1 ist eine Vorrichtung zur Ermittlung einer Neutrallage zweier Bauteile bekannt, wobei die beiden Bauteile in Längsrichtung zueinander beweglich angeordnet sind. Die Vorrichtung umfasst eine Verstelleinrichtung zur Bewegung der Bauteile in eine beliebige Relativlage und einen Lagesensor zur Erkennung der Relativbewegung sowie einer an dem ersten Bauteil befindlichen Wegmarkierung und einem an dem zweiten Bauteil befindlichen Markierungssensor, welcher die Wegmarkierung in einem Erfassungsbereich erkennt. Die Neutrallage bzw. Nulllage entspricht dabei der Position der Bauteile, um welche sie sich während des Betriebes gleichmäßig bewegen. Nach jeder Inbetriebnahme der Vorrichtung wurde noch keine Neutrallage ermittelt, das heißt, es steht zwar der vorher ermittelte Abstand zwischen dem Erfassungsbereich des Markierungssensors und der Wegmarkierung fest, welche Position die Bauteile momentan zueinander einnehmen, wo sich ihre Neutrallage befindet, ist jedoch unbekannt. Daher ist es erforderlich, dass die Verstelleinrichtung die Bauteile derart zueinander verschiebt, dass die Wegmarkierung den Markierungssensor passiert, wobei die Bewegungsrichtung von dem im Erfassungsbereich erkannten Markierungsbereich abhängig ist.

Demzufolge ist es bei der bekannten Vorrichtung unbedingt erforderlich, dass nach der Inbetriebnahme eine Bewegung der Bauteile durchgeführt wird, um die Position bzw. die Nulllage erfassen zu können.

Der vorliegenden Erfindung liegt die Aufgabe zu Grunde, eine Vorrichtung zum Erfassen zumindest einer Referenzposition bzw. einer Nulllage der eingangs beschriebenen Gattung vorzuschlagen, bei der die Erfassung der Nulllage ohne eine vorherige Bewegung ermöglicht wird.

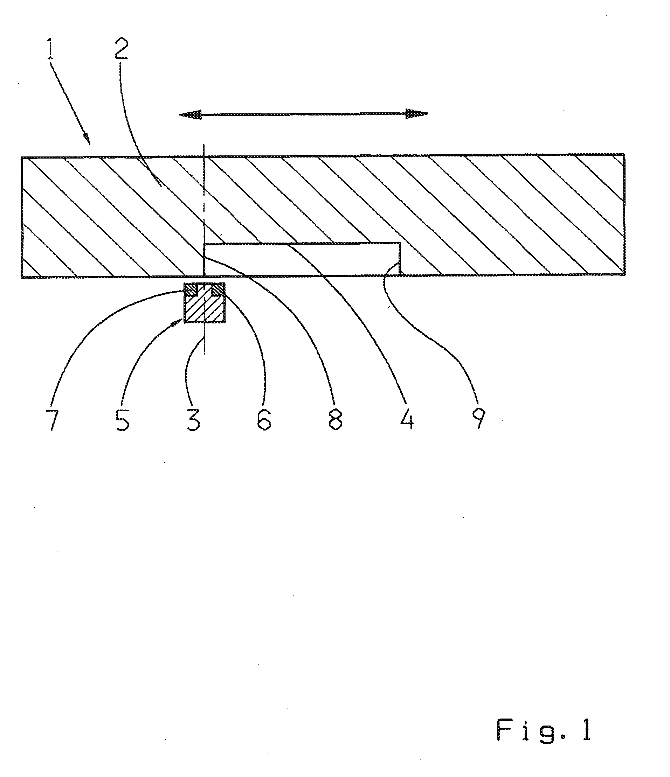

Diese Aufgabe wird erfindungsgemäß durch die Merkmale des Patentanspruches 1 gelöst. Weitere vorteilhafte Ausgestaltungen ergeben sich aus den Unteransprüchen und der Zeichnung.

Somit wird eine Vorrichtung zum Erfassen zumindest einer Nulllage als Referenzposition mit zumindest einem sich bewegenden Bauteil oder dergleichen mit zumindest einer ortsfesten Erfassungseinrichtung , welche der Nulllage des Bauteiles zugeordnet ist, und mit zumindest einer Aussparung an dem Bauteil im Bereich der zu erfassenden Nulllage vorgeschlagen, wobei als Erfassungseinrichtung zumindest zwei ein Sensorpaar oder dergleichen bildende Sensoren vorgesehen sind, und wobei die Sensoren der Aussparung im Bereich der Nulllage zur Erfassung einer Zustandsänderung zugeordnet sind, so dass die Erfassung der Nulllage ohne eine Bewegung des Bauteils möglich ist.

Die verwendeten Sensoren des Sensorpaars zeichnen sich dadurch aus, dass diese an einer definierten Position einen Zustandsübergang durch das Schalten derselben erzielen. Auf diese Weise kann zum Einschaltzeitpunkt des Systems aufgrund der Pegel der beiden Sensoren eindeutig bestimmt werden, welchem Zustand sie zugeordnet sind. In vorteilhafter Weise kann dadurch eine sonst erforderliche Initialisierung entfallen. Zudem sind keine aktiven Bewegungen des Verstellmechanismus beziehungsweise des Bauteils zur Erfassung der Nulllage erforderlich. Dadurch wird der Energiebedarf der erfindungsgemäßen Vorrichtung minimiert. Ein weiterer Vorteil ergibt sich insbesondere bei der Verwendung der Vorrichtung bei Sicherheitssystemen dadurch, dass diese beim Start mechanisch gesperrt bleiben können, da zur Erfassung keine Bewegung erforderlich ist. Somit wird die Anforderung der NichtBewegung im Stand bei Sicherheitssystemen erfüllt.

Die erfindungsgemäß vorgeschlagene Vorrichtung ermöglicht somit eine zusätzliche Absolut-Lage-Referenzierung durch die Verwendung redundanter Sensorik, welche durch ihre besondere Anordnung zur Erfassung von Zustandsänderungen in der Lage ist, die Absolutpositionserfassung zu realisieren.

Im Rahmen einer möglichen Ausführungsvariante der Erfindung kann vorgesehen sein, dass die Sensoren des Sensorpaars jeweils einer Seite eines Endbereiches oder dergleichen der Aussparung zum Erfassen des Zustandsübergangs positioniert sind, wobei der Endbereich der Nulllage des Bauteils entspricht.

Auf diese Weise ist es möglich, dass zum Beispiel nach der Inbetriebnahme ohne eine Bewegung des Bauteils die Nulllage eindeutig erkannt wird, wenn beide Sensoren unterschiedliche Zustände erkennen. Dadurch, dass die Nulllage des Bauteils zum Beispiel einem Endbereich der Aussparung zugeordnet ist, erkennt der eine Sensor kein Material des Bauteils, da er sich noch im Bereich der Aussparung befindet und der andere Sensor erkennt Material des Bauteils, da er sich auf der anderen Seite des Endbereiches, also über dem Bauteil befindet. In diesem Fall kann mit absoluter Sicherheit die Nulllage als Position des Bauteils bestimmt werden, so dass der normale Betrieb beginnen kann.

Wenn nach der Inbetriebnahme beide Sensoren gleiche Zustände erfassen, kann daraus geschlossen werden, dass sich das Bauteil nicht in der Nulllage befindet. In diesem Fall ist eine entsprechende Bewegung des Bauteils in die Neutrallage erforderlich, um den erkannten Fehlerzustand zu beheben.

Vorzugsweise kann die erfindungsgemäße Vorrichtung zum Erfassen der Nulllage von Bauteilen eines Stellantriebes oder dergleichen verwendet werden. Beispielsweise zur Erfassung einer Radstellung bei einer Fahrzeuglenkung oder auch zur Positionserfassung von Roboterantrieben oder dergleichen.

Als Sensoren werden vorzugsweise schaltende Sensoren verwendet, die nur zwei Zustände erkennen, so dass diese eindeutig eine Position erfassen können. Wenn diese Sensoren zur Bestimmung einer Referenzposition verwendet werden, können auch so genannte Nährungssensoren verwendet werden. Bei den schaltenden Sensoren wechseln die Sensoren zwischen zwei elektrisch sicher erkennbaren Zuständen. Es ist auch möglich andere Arten von Sensoren zu verwenden.

Die vorliegende Erfindung wird nun näher anhand der Zeichnung erläutert. Die einzige Figur der Erfindung zeigt einen möglichen schematischen Aufbau einer erfindungsgemäß vorgeschlagenen Vorrichtung 1 zur Erfassung einer Nulllage bei einem sich bewegenden Bauteil 2. Als Bauteil kann beispielsweise ein Bauteil eines Stellantriebes oder dergleichen verwendet werden.

Das Bauteil 2 kann in Längsrichtung beidseitig bewegt werden, welches durch einen Doppelpfeil in der Figur angedeutet ist. Die konstruktiv festgelegte Nulllage 3 des Bauteils 2 ist durch eine strichpunktierte Linie angedeutet. Ferner umfasst das Bauteil 2 eine Aussparung 4 mit zwei Enden bzw. Endbereichen 8 und 9. Die Aussparung ist mit einem Endbereich 8 der Nulllage 3 zugeordnet ist.

Die Vorrichtung 1 umfasst ferner eine ortsfeste Erfassungseinrichtung 5, die der Nulllage 3 des Bauteils 2 zugeordnet ist. Die Erfassungseinrichtung 5 besteht im Wesentlichen aus zwei Sensoren 6, 7 als Sensorpaar. Die Sensoren 6, 7 sind zu beiden Seiten der konstruktiv festgelegten Nulllage 3 des Bauteiles 2 bzw. dem Endbereich 8 der Aussparung 4 zugeordnet und in einem geringen Abstand voneinander positioniert. Die Sensoren 6, 7 zeichnen sich dadurch aus, dass sie an einer definierten Position einen Zustandsübergang durch entsprechendes Schalten erzielen können. Denn die schaltenden Sensoren 6, 7 sind zwischen zwei elektrisch sicher erkennbaren Zuständen schaltbar, so dass diese zur Bestimmung einer eindeutigen Position verwendbar sind.

Erfindungsgemäß ist die Aussparung 4 mit dem Endbereich der Nulllage 3 des Bauteils 2 derart zugeordnet, dass auf diese Weise im Bereich der Nulllage 3 eine Zustandsänderung durch die beiden Sensoren 6, 7 erkannt werden kann. Wenn beispielsweise nach der Inbetriebnahme beide Sensoren 6, 7 unterschiedliche Zustände erfassen, kann die Nulllage 3 des Bauteils 2 erkannt werden. Dies deshalb, weil der rechte Sensor 6 der Erfassungseinrichtung 5 keinem Material zugeordnet ist und einen dementsprechenden Zustand erfasst, da sich der Sensor 6 über der Aussparung 4 befindet. Dagegen befindet sich der linke Sensor 7 über dem Material des Bauteils 2, weil sich dieser, wie in der Figur dargestellt nicht über der Aussparung 4 befindet. Auf diese Weise können die verschiedenen Zustände von der Erfassungseinrichtung 5 erkannt werden, die die Nulllage 3 des Bauteils 2 charakterisieren.

Wenn sich beispielsweise das Bauteil 2 nicht in seiner Nulllage 3 befindet, ist die Erfassungseinrichtung mit den beiden Sensoren 6, 7 entweder innerhalb der Aussparung 4 oder außerhalb der Aussparung 4 über dem Bauteil 2. In diesen Situationen erfassen beide Sensoren 6, 7 gleiche Zustände, da sich die Sensoren 6, 7 entweder beide über Material oder über der Aussparung 3 befinden. Somit kann die Erfassungseinrichtung ermitteln, dass sich das Bauteil 2 nicht in der Nulllage 3 befindet und entsprechende Maßnahmen einleiten, um diesen Fehlerzustand zu korrigieren. Die Länge der Aussparung 4 ist so bemessen, dass das Bauteil 2 im Rahmen seiner Bewegungen nicht den anderen, der Nulllage 3 nicht zugeordneten Endbereich 9 der Aussparung 4 erreichen kann.

### Bezugszeichen

- 1: Vorrichtung
- 2: Bauteil
- 3: Nulllage
- 4: Aussparung
- 5: Erfassungseinrichtung
- 6: rechter Sensor
- 7: linker Sensor
- 8: linker Endbereich der Aussparung
- 9: rechter Endbereich der Aussparung

## Patentansprüche

1. Vorrichtung (1) zum Erfassen zumindest einer Nulllage (3) bei zumindest einem sich bewegenden Bauteil (2), mit zumindest einer ortsfesten Erfassungseinrichtung (5), welche der Nulllage (3) des Bauteils (2) zugeordnet ist, und mit zumindest einer Aussparung (4) an dem Bauteil (2) im Bereich der zu erfassenden Nulllage (3), **dadurch gekennzeichnet, dass** als Erfassungseinrichtung (5) zumindest zwei ein Sensorpaar bildende Sensoren (6, 7) vorgesehen sind, wobei das Sensorpaar der Aussparung (4) im Bereich der Nulllage (3) zur Erfassung einer Zustandsänderung zugeordnet ist, so dass die Erfassung der Nulllage (3) ohne eine Bewegung des Bauteiles (2) realisierbar ist.

2. Vorrichtung nach Anspruch 1, **dadurch gekennzeichnet, dass** die Sensoren (6, 7) des Sensorpaars jeweils an einer Seite eines Endbereiches (8, 9) der Aussparung (4) zum Erfassen des Zustandsüberganges positioniert sind, wobei der Endbereich (8) der Nulllage (3) des Bauteils (2) entspricht.

3. Vorrichtung nach einem der vorangehenden Ansprüche, **dadurch gekennzeichnet, dass**, wenn nach der Inbetriebnahme der Erfassungseinrichtung beide Sensoren (6, 7) unterschiedliche Zustände ermitteln, die Nulllage (3) des Bauteils (2) erfasst ist.

4. Vorrichtung nach einem der vorangehenden Ansprüche, **dadurch gekennzeichnet, dass**, wenn nach der Inbetriebnahme beide Sensoren (6, 7) gleiche Zustände ermitteln, eine von der Nulllage (3) sich unterscheidende Position des Bauteils (2) erfasst ist.

5. Vorrichtung nach einem der vorangehenden Ansprüche, **dadurch gekennzeichnet, dass** die Nulllage (3) des Bauteils (2) eines Stellantriebes erfassbar ist.

6. Vorrichtung nach einem der vorangehenden Ansprüche, **dadurch gekennzeichnet, dass** sie zur Erfassung einer Radstellung einer Fahrzeuglenkung verwendbar ist.

7. Vorrichtung nach einem der vorangehenden Ansprüche, **dadurch gekennzeichnet, dass** sie bei einem Roboterantrieb verwendbar ist.

8. Vorrichtung nach einem der vorangehenden Ansprüche, **dadurch gekennzeichnet, dass** die Erfassungseinrichtung (5) schaltende Sensoren (6, 7) zum Erfassen von zwei Zuständen aufweist.

## Claims

1. Device (1) for detecting at least one zero position (3) in the case of at least one moving component (2), having at least one positionally fixed detection device (5) which is assigned to the zero position (3) of the component (2), and having at least one recess (4) on the component (2) in the region of the zero position (3) to be detected, **characterized in that** at least two sensors (6, 7) which form a sensor pair are provided as a detection device (5), and the sensor pair is assigned to the recess (4) in the region of the zero position (3) in order to detect a change in state, with the result that the detection of the zero position (3) can be effected without a movement of the component (2).

2. Device according to Claim 1, **characterized in that** the sensors (6, 7) of the sensor pair are each positioned on a side of an end region (8, 9) of the recess (4) for the detection of the state transition, wherein the end region (8) corresponds to the zero position (3) of the component (2).

3. Device according to one of the preceding claims, **characterized in that** if the two sensors (6, 7) determine different states after the activation of the detection device, the zero position (3) of the component (2) is detected.

4. Device according to one of the preceding claims, **characterized in that** if the two sensors (6, 7) determine the same states after the activation, a position of the component (2) which differs from the zero position (3) is detected.

5. Device according to one of the preceding claims, **characterized in that** the zero position (3) of the component (2) of an actuating drive can be detected.

6. Device according to one of the preceding claims, **characterized in that** the device can be used to detect a wheel position of a vehicle steering system.

7. Device according to one of the preceding claims, **characterized in that** the device can be used in a robot drive.

8. Device according to one of the preceding claims, **characterized in that** the detection device (5) has switching sensors (6, 7) for detecting two states.

## Revendications

1. Dispositif (1) pour détecter au moins une position zéro (3) dans au moins un composant (2) se déplaçant, avec au moins un dispositif de détection (5) fixe sur place associé à la position zéro (3) du composant (2) et avec au moins une niche (4) au niveau du composant (2) dans la région de la position zéro (3) à détecter, **caractérisé en ce que** le dispositif de détection (5) prévu comprend au moins deux capteurs (6, 7) formant une paire de capteurs, la paire de capteurs étant associée à la niche (4) réalisée dans la région de la position zéro (3) afin de détecter un changement d'état, de sorte que la détection de la position zéro (3) peut être réalisée sans aucun mouvement du composant (2).

2. Dispositif selon la revendication 1, **caractérisé en ce que** les capteurs (6, 7) de la paire de capteurs sont respectivement positionnés au niveau d'un côté d'une région d'extrémité (8, 9) de la niche (4) pour détecter l'état de transition, la région d'extrémité (8) correspondant à la position zéro (3) du composant (2).

3. Dispositif selon l'une quelconque des revendications précédentes, **caractérisé en ce que** lorsqu'après la mise en service du dispositif de détection, les deux capteurs (6, 7) détectent des états différents, la position zéro (3) du composant (2) est détectée.

4. Dispositif selon l'une quelconque des revendications précédentes, **caractérisé en ce que** lorsqu'après la mise en service, les deux capteurs (6, 7) détectent les mêmes états, une position du composant (2) distincte de la position zéro (3) est détectée.

5. Dispositif selon l'une quelconque des revendications précédentes, **caractérisé en ce que** la position zéro (3) du composant (2) d'un servomoteur peut être détectée.

6. Dispositif selon l'une quelconque des revendications précédentes, **caractérisé en ce qu'**il peut être utilisé pour détecter une position de roue d'une direction de véhicule.

7. Dispositif selon l'une quelconque des revendications précédentes, **caractérisé en ce qu'**il peut être utilisé pour l'entraînement d'un robot.

8. Dispositif selon l'une quelconque des revendications précédentes, **caractérisé en ce que** le dispositif de détection (5) comporte des capteurs (6, 7) pouvant être connectés pour détecter deux états.
